# EUROPEAN PATENT SPECIFICATION

(11) **EP 3 211 688 B1**
(45) Date of publication and mention of the grant of the patent: **29.04.2020**
(21) Application number: 17158188.7
(22) Date of filing: 27.02.2017
(51) Int. Cl.: H01M 2/02, H01M 2/06, H01M 10/04, H01M 10/0585

(54) **RECHARGEABLE BATTERY**
WIEDELAUFLADBARE BATTERIE
BATTERIE RECHARGEABLE

(30) Priority: 26.02.2016 KR 20160023645
(43) Date of publication of application: 30.08.2017
(73) Proprietor: Samsung SDI Co., Ltd, Gyeonggi-do 17084 (KR)
(72) Inventor: KIM, Bo-Hyun, 17084 Gyeonggi-do (KR); HAN, Yu-Jin, 17084 Gyeonggi-do (KR); KWON, Hye-Jin, 17084 Gyeonggi-do (KR); LEE, Jong-Ki, 17084 Gyeonggi-do (KR); KIM, Joon-Sup, 17084 Gyeonggi-do (KR)
(74) Representative: Mounteney, Simon James

(56) References cited:
- EP-A2- 2 549 561
- WO-A1-2016/018129
- US-A1- 2014 099 525
- US-A1- 2014 106 206
- US-A1- 2015 086 842

## Description

### BACKGROUND

### 1. Field

This invention relates to a rechargeable battery.

### 2. Description of the Related Art

With advancement of technologies for mobile devices, a demand for rechargeable batteries as an energy source has been increasing. A rechargeable battery differs from a primary battery in that it is designed to be repeatedly charged and discharged, while the latter is not designed to be recharged.

A low-capacity rechargeable battery is used in small, portable electronic devices, such as mobile phones, notebook computers, and camcorders, while a high-capacity rechargeable battery can be used as a power source for driving motors of a hybrid vehicle, an electric vehicle, and the like.

For example, a pouch type rechargeable battery includes an electrode assembly for performing charging and discharging operations, a pouch accommodating the electrode assembly and an electrolyte solution, and a lead tab through which the electrode assembly is drawn out of the pouch.

Electronic devices can accommodate variously sized and shaped rechargeable batteries depending on their type, size, and inner space shape thereof. However, because rechargeable batteries are typically formed in shapes, such as a cylindrical or cuboid shape, they may not be effectively and easily applied to the accommodation spaces of various electronic devices.

In order to be effectively applied to inner spaces (accommodation spaces) of various electronic devices, the pouch type rechargeable battery may be atypically formed to have a polyhedral shape other than a typical cuboid shape or to have a modified cuboid shape in which a portion thereof is curved.

The rechargeable battery includes a sealing portion sealing the outside of the pouch to accommodate the electrode assembly, and a lead tab connected to the electrode assembly. The lead tab is drawn out of the pouch through the sealing portion.

The pouch is provided with a terrace portion formed at a side from which the lead tab is drawn out, and the terrace portion (e.g., a space or size of the terrace portion) reduces or limits an amount of an active material of the electrode assembly, thereby decreasing a capacity of the rechargeable battery.

Although the lead tab may be drawn out of the atypical pouch in various directions according to the shape of the atypical pouch, the capacity of the rechargeable battery may greatly deteriorate due to increase in the size of the terrace portion.

The above information disclosed in this Background section is for enhancement of understanding of the background of the described technology and it may contain information that is not prior art.
Whilst different from the subject-matter of the present disclosure, background art includes: EP2549561, US2014106206, US2014099525, and US2015086842. EP2549561 relates to a pouch type case having trimming portions formed on both sides or four corners thereof and a battery pack including the same. The trimming portions are formed on the corners of the pouch type case such that the trimming portions are indented toward an electrode assembly accommodating part to reduce a unit area so as to increase pressure applied to unit cells when a battery pack is assembled, thereby facilitating assembling of the battery pack and increasing cell capacity per unit area. Furthermore, the unit cells can be fixed in the battery pack more stably. The pouch type case reduces the unit area so as to include a relatively large number of cells for pressure applied to the cells when the battery pack is assembled to thereby increase the cell capacity. Moreover, a holder having a circular cross-section shape can be easily inserted into the battery pack when the battery pack is assembled to fix the unit cells in the battery pack more stably, thereby improving the stability of the battery pack and facilitating the assembling of the battery pack.
US2014106206 relates to a method of manufacturing an electrode assembly, the method including: preparing an electrode laminate including at least one negative electrode, at least one positive electrode, and at least one separation film; generating a separation film assembly by bonding remaining portions of the separation film positioned in regions not corresponding to shapes of the negative electrode and the positive electrode; and cutting the separation film assembly so as to correspond to the shapes of the negative electrode and the positive electrode, and an electrode assembly manufactured by the method.
US2014099525 describes an electrode assembly including a stack of unit cells respectively including at least one negative electrode and at least one positive electrode, alternately stacked, wherein at least one separator is placed on each of both sides of the electrodes, and at least one of the unit cells has an area different from that of an adjacent unit cell to form at least one stepped portion on the electrode assembly. In addition, there are also provided a battery cell, a battery pack, and a device that include the electrode assembly.
US2015086842 describes a battery cell configured to have a structure in which an electrode assembly, including cathodes, anodes, and separators disposed respectively between the cathodes and the anodes, is mounted in a battery case and in which a cathode terminal and an anode terminal protrude from a first outer circumference of the battery case and a second outer circumference of the battery case opposite to the first outer circumference of the battery case is curved when viewed from above.

### SUMMARY

The invention has been made in an effort to provide a rechargeable battery having an increased capacity. Typically, but not necessarily, embodiments of the invention may enable the reduction of a size of a terrace portion through which a lead tab is drawn out of an atypically formed pouch having, for example, a polyhedral shape different from a cuboid shape, a modified cuboid shape having a curved portion, or a modified circular plate shape having a flat or straight portion.

An embodiment of the invention provides a rechargeable battery including: an electrode assembly configured to charge and discharge a current; a pouch accommodating the electrode assembly the pouch comprising, when viewed in plan view, a first straight line portion and a second straight line portion that is longer than the first straight line portion, wherein the pouch comprises a first exterior member and a second exterior member that face each other and accommodate the electrode assembly, wherein, when viewed in plan view, the first straight line portion and the second straight line portion of the pouch are parallel, and wherein the first straight line portion and the second straight line portion of the pouch are respectively connected to a first curved line portion and a second curved line portion that face each other and extend between the first straight line portion and the second straight line portion wherein the electrode assembly comprises: a first straight line electrode portion and a second straight line electrode portion that respectively correspond to the first straight line portion and the second straight line portion; and a first curved line electrode portion and a second curved line electrode portion that respectively correspond to the first curved line portion and the second curved line portion and extend between the first straight line electrode portion and the second straight line electrode portion; a sealing portion of the first exterior member and the second exterior member, the sealing portion having a sealing width and extending along an outer periphery of the electrode assembly, wherein the sealing portion comprises a straight line sealing portion, a first curved line sealing portion and a second curved line sealing portion that are formed to respectively correspond to the second straight line electrode portion, the first curved line electrode portion and the second curved line electrode portion; and a lead tab electrically connected to the electrode assembly and drawn out through the first straight line portion of the pouch, wherein the sealing portion forms a terrace portion in the first straight line portion through which the lead tab is drawn out and is folded to closely contact a lateral surface of the pouch in the second straight line portion, the first curved line portion and the second curved line portion.

The electrode assembly may include a first straight line electrode portion and a second straight line electrode portion that respectively correspond to the first straight line portion and the second straight line portion.

The lead tab may be connected to the electrode assembly at the first straight line electrode portion.

The pouch may include a terrace portion in the first straight line portion through which the lead tab is drawn out.

The first straight line portion of the pouch and the first straight line electrode portion of the electrode assembly may have a space therebetween which partially accommodates the lead tab.

In an example, not according to the invention, when viewed in plan view, the first straight line portion and the second straight line portion of the pouch may be directly connected to each other at one end of the first and second straight line portions. The first straight line portion and the second straight line portion of the pouch may be respectively connected to a curved line portion at other ends of the first and second straight line portions.

The electrode assembly may include a curved line electrode portion that corresponds to the curved line portion.

The pouch may include a first exterior member and a second exterior member that face each other and accommodate the electrode assembly. A sealing portion of the first exterior member and the second exterior member may have a sealing width and may extend along an outer periphery of the electrode assembly. The sealing portion may form a terrace portion in the first straight line portion through which the lead tab is drawn out.

In an embodiment, when viewed in plan view, the first straight line portion and the second straight line portion of the pouch may be parallel, and the first straight line portion and the second straight line portion of the pouch may be respectively connected to a first curved line portion and a second curved line portion that face each other.

The electrode assembly include: a first straight line electrode portion and a second straight line electrode portion that respectively correspond to the first straight line portion and the second straight line portion; and a first curved line electrode portion and a second curved line electrode portion that respectively correspond to the first curved line portion and the second curved line portion and extend between the first straight line electrode portion and the second straight line electrode portion.

The pouch includes a first exterior member and a second exterior member that face each other and accommodate the electrode assembly. A sealing portion of the first exterior member and the second exterior member has a sealing width and extends along an outer periphery of the electrode assembly. The sealing portion forms a terrace portion in the first straight line portion through which the lead tab is drawn out.

In an example, not according to the invention, when viewed in plan view, the first straight line portion and the second straight line portion of the pouch may be parallel, and the first straight line portion and the second straight line portion of the pouch may be respectively connected to a first bent portion and a second bent portion that face each other.

The electrode assembly may include: a first straight line electrode portion and a second straight line electrode portion that respectively correspond to the first straight line portion and the second straight line portion; and a first bent electrode portion and a second bent electrode portion that respectively correspond to the first bent portion and the second bent portion and extend between the first straight line electrode portion and the second straight line electrode portion.

The pouch may include a first exterior member and a second exterior member that face each other and accommodate the electrode assembly. A sealing portion of the first exterior member and the second exterior member may have a sealing width and may extend along an outer periphery of the electrode assembly. The sealing portion may form a terrace portion in the first straight line portion through which the lead tab is drawn out.

At least some of the above and other features of the invention are set out in the claims.

According to an embodiment of the invention, when a pouch has a first straight line portion having a relatively short length and a second straight line portion having a relatively long length and when a lead tab connected to an electrode assembly is drawn out of the pouch through the first straight line portion, a space (e.g., a terrace space and/or an internal space at the first straight line portion) through which the lead tab is drawn out may be reduced or minimized. Accordingly, a capacity of the rechargeable battery may be increased.

### BRIEF DESCRIPTION OF THE DRAWINGS

FIG. 1 is an exploded perspective view of a rechargeable battery according to a first example not according to the invention.
FIG. 2 is an assembled perspective view of the rechargeable battery illustrated in FIG. 1.
FIG. 3 is a perspective view of the rechargeable battery illustrated in FIG. 2 in which a sealing portion of a pouch is folded to closely contact a lateral surface of the rechargeable battery.
FIG. 4 is a top plan view of FIG. 3.
FIG. 5 is a top plan view of a rechargeable battery according to an embodiment of the invention.
FIG. 6 is a top plan view of a rechargeable battery according to a second example not according to the invention.

### DETAILED DESCRIPTION

Aspects of the present invention will be described more fully hereinafter with reference to the accompanying drawings, in which examples not according to the invention and an embodiment of the present invention are shown. The drawings and description are to be regarded as illustrative in nature and not restrictive. Like reference numerals designate like elements throughout the specification.

It will be understood that when an element or layer is referred to as being "on," "connected to," or "coupled to" another element or layer, it may be directly on, connected, or coupled to the other element or layer or one or more intervening elements or layers may also be present. When an element is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present invention relates to "one or more embodiments of the present invention." Expressions, such as "at least one of," when preceding a list of elements, modify the entire list of elements and do not modify the individual elements of the list. Also, the term "exemplary" is intended to refer to an example or illustration. As used herein, the terms "use," "using," and "used" may be considered synonymous with the terms "utilize," "utilizing," and "utilized," respectively.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments. In the figures, dimensions of the various elements, layers, etc. may be exaggerated for clarity of illustration.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing particular example embodiments of the present invention and is not intended to be limiting of the described example embodiments of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

In addition, throughout the specification, an atypical shape indicates a shape other than (e.g., opposite to) a typical shape, and the typical shape indicates a cuboid shape or a circular plate shape. For example, the atypical shape may be a polyhedral shape or a polygonal plate shape, such as a modified cuboid or circular plate shape.

In addition, when the atypical shape (e.g., the modified cuboid or circular plate shape) of the rechargeable battery is viewed in plan view, it may include a curved portion partially modified to be a straight line portion or a straight line portion partially modified to be a curved line portion.

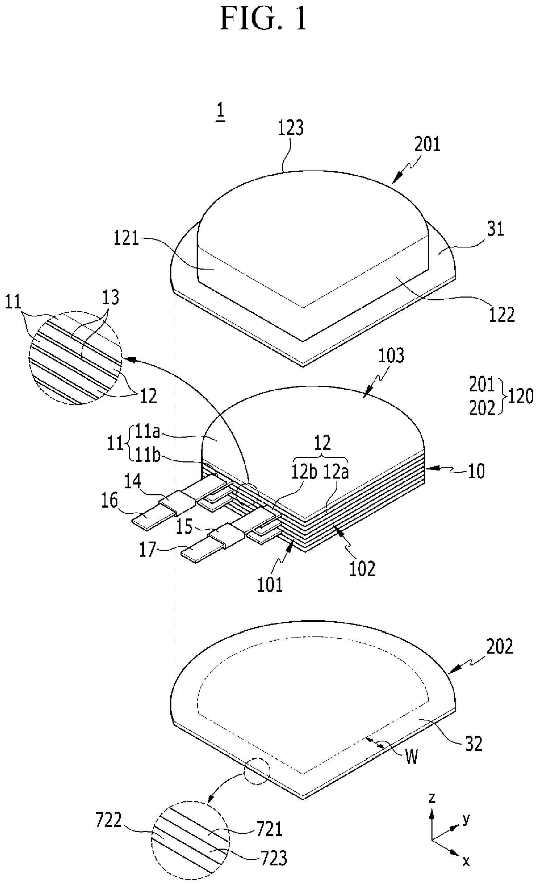

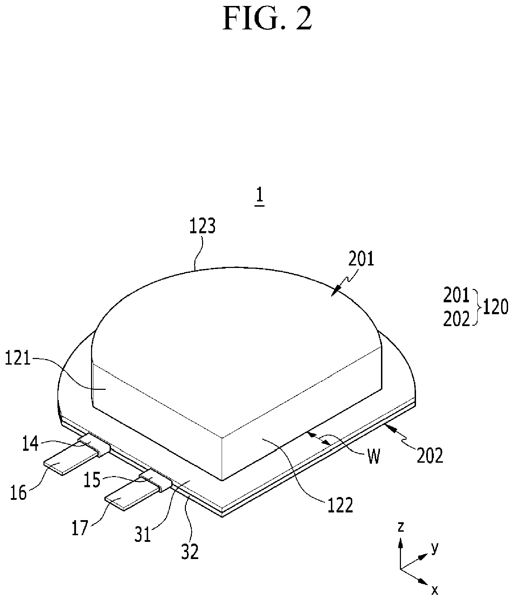

FIG. 1 is an exploded perspective view of a rechargeable battery according to a first example, and FIG. 2 is an assembled perspective view of the rechargeable battery illustrated in FIG. 1. Referring to FIGS. 1 and 2, a rechargeable battery 1 according to a first example includes an electrode assembly 10 configured to charge and discharge a current, a flexible pouch 120 that accommodates an electrolyte solution and the electrode assembly 10, and lead tabs 16 and 17 that are electrically connected to the electrode assembly 10 and that are drawn out through the pouch 120.

The electrode assembly 10 may be formed by stacking a negative electrode 11 and a positive electrode 12 at opposite sides of a separator 13, which is an insulator. The negative electrode 11 and the positive electrode 12 respectively include coated regions 11a and 12a at where active materials are coated on current collectors made of metal (e.g., Cu, Al) thin plates and uncoated regions 11b and 12b that are formed as exposed current collectors at where the active materials are not coated.

For example, each of the negative electrode 11, the positive electrode 12, and the separator 13 has a partial circular plate shape including a portion which extends in (e.g., is cut in) a straight line. For example, when viewed in plan view, the electrode assembly 10 includes a first straight line electrode portion 101 and a second straight line electrode portion 102 corresponding to two straight line portions, and a curved line electrode portion 103 corresponding to one curved line portion, which, together, provide a partially modified circular plate shape. For example, the electrode assembly 10 is atypically formed to have two flat or straight surfaces (e.g., edges or sides) and one or more curved surfaces (e.g., edges or sides) that are modified from the circular plate shape.

The first straight line electrode portion 101 is formed to have a shorter length than the second straight line electrode portion 102. For example, an x-axis directional length of first straight line electrode portion 101 is less than a y-axis directional length of the second straight line electrode portion 102. The first and second straight line electrode portions 101 and 102 are connected to each other at a right angle (e.g., at substantially a right angle) at ends thereof, and they are respectively connected to the curved line electrode portion 103 at the other ends thereof.

In other examples, the first and second straight line electrode portions may be formed to have the same or substantially the same length. In other examples, the first and second straight line electrode portions may be connected to each other at an acute angle or an obtuse angle at ends thereof, and they may be respectively connected to the curved line electrode portion at the other ends thereof.

In the first example illustrated in FIGS. 1 and 2, each of the first and second straight line electrode portions 101 and 102 is provided, and when viewed in plan view, the first and second straight line electrode portions 101 and 102 are connected to have a structure in which they outwardly protrude (e.g., extend perpendicularly to each other).

In other examples, a plurality of each of the first and second straight line electrode portions may be provided according to the external shape of the electrode assembly and the rechargeable battery, and when viewed in plan view, the first and second straight line electrode portions may be connected to have a structure in which they are inwardly depressed.

The negative and positive electrodes 11 and 12 respectively form flat or straight surfaces at lateral surfaces corresponding to the first straight line electrode portion 101 and the second straight line electrode portion 102 of the electrode assembly 10 and respectively form a curved surface at a lateral surface corresponding to the curved line electrode portion 103 of the electrode assembly 10.

The uncoated region 11b of the negative electrode 11 protrudes in the y-axis direction in the first straight line electrode portion 101 in which the negative electrode 11 is stacked. The uncoated region 12b of the positive electrode 12 protrudes in the y-axis direction in the first straight line electrode portion 101 in which the positive electrode 12 is stacked.

The uncoated regions 11b and 12b of the negative and positive electrodes 11 and 12 are alternately disposed at opposite sides of the first straight line electrode portion 101 in the x-axis direction, and the first straight line electrode portion 101 is formed to be shorter than the second straight line electrode portion 102 of the electrode assembly 10.

When the rechargeable battery 1 is viewed in plan view, the pouch 120 includes a first straight line portion 121, a second straight line portion 122 formed to be longer than the first straight line portion 121, and a curved line portion 123 to accommodate the electrode assembly 100 having the first and second straight line electrode portions 101 and 102 and the curved line electrode portion 103. A length of the first straight line portion 121 in the x-axis direction is less than that of the second straight line portion 122 in the y-axis direction.

In the pouch 120, the first straight line portion 121 and the second straight line portion 122 are directly (e.g., perpendicularly) connected to each other at ends thereof, and they are respectively connected to the curved line portion 123 at the other ends thereof.

When the electrode assembly 10 is accommodated in the pouch 120, the first straight line portion 121 and the second straight line portion 122 of the pouch 120 respectively correspond to the first straight line electrode portion 101 and the second straight line electrode portion 102 of the electrode assembly 10 and the curved line portion 123 of the pouch 120 corresponds to the curved line electrode portion 103 of the electrode assembly 10.

The lead tabs 16 and 17 are respectively connected to the uncoated regions 11b and 12b of the negative and positive electrodes 11 and 12 provided in the first straight line electrode portion 101 of the electrode assembly 10 and are drawn out through the first straight line portion 121 of the pouch 120.

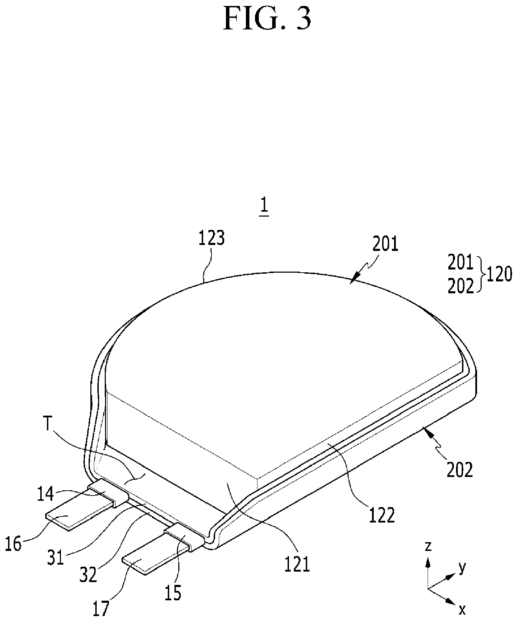

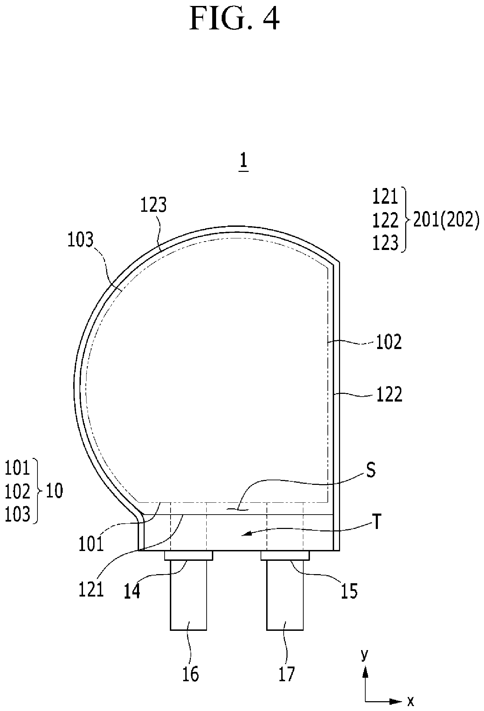

FIG. 3 is a perspective view of the rechargeable battery illustrated in FIG. 2 in which a sealing portion of a pouch is folded to closely contact a lateral surface of the rechargeable battery, and FIG. 4 is a top plan view of FIG. 3. Referring to FIGS. 3 and 4, the pouch 120 has a terrace portion (T) that is formed in the first straight line portion 121 through which the lead tabs 16 and 17 are drawn out.

The lead tabs 16 and 17 are supported by the terrace portion (T) to have a structure in which they are stably drawn out. In such a structure, a space (S) is formed between the first straight line portion 121 of the pouch 120 and the first straight line electrode portion 101 of the electrode assembly 10 that partially accommodates portions or sides of the lead tabs 16 and 17 that are drawn out therethrough.

Because the first straight line portion 121 of the pouch 120 is shorter than the second straight line portion 122 thereof and because the first straight line electrode portion 101 of the electrode assembly 10 is shorter than the second straight line electrode portion 102 thereof, the space (S) accommodating the lead tabs 16 and 17 which are drawn out through the pouch 120 may be reduced or minimized.

For example, the terrace portion (T) formed in the first straight line portion 121 of the pouch 120 is smaller than a terrace portion that could be formed in the second straight line portion 122 of the pouch 120. Because the lead tabs 16 and 17 are drawn out through the second straight line portion 122 of the pouch 120, the space (S) that is formed between the first straight line portion 121 of the pouch 120 and the first straight line electrode portion 101 of the electrode assembly 10 and that partially accommodates the lead tabs 16 and 17 is smaller than a space that would be formed between the second straight line portion 122 of the pouch 120 and the second straight line electrode portion 102 of the electrode assembly 10 if the lead tabs 16 and 17 were to be drawn out through the second straight line portion 122 of the pouch 120.

As areas (e.g., surface areas) of the coated regions 11a and 12a of the negative and positive electrodes 11 and 12 provided in the electrode assembly 10 increase, amounts of the active materials thereof increase, thereby increasing the capacity of the rechargeable battery 1.

For example, the pouch 120 includes a first exterior member 201 and a second exterior member 202 that face each other and accommodate the electrode assembly 10. The first exterior member 201 and the second exterior member 202 form sealing portions 31 and 32 which are thermo-bonded to each other (e.g., the sealing portions 31 and 32 are thermo-bonded or heat-sealed portions of the first and second exterior members 201 and 202) to have sealing widths (W) (e.g., to have predetermined sealing widths) and extend along an outer circumference or periphery of the electrode assembly 10.

The sealing portions 31 and 32 form the terrace portion (T) in the first straight line portion 121 through which the lead tabs 16 and 17 are drawn out. The lead tabs 16 and 17 are respectively connected to the uncoated regions 11b and 12b of the negative and positive electrodes 11 and 12, are insulated from each other by interposing insulating members 14 and 15 therebetween, and are drawn out of the pouch 120 through the sealing portions 31 and 32.

For example, the pouch 120 includes an inner sheet 721, an outer sheet 722, and a metal sheet 723. The first and second exterior members 201 and 202 may be formed to have the same layered structure including (e.g., consisting of) the inner sheet 721, the outer sheet 722, and the metal sheet 723.

The inner sheet 721 forms an inner surface of the pouch 120, serves as an insulating member and a thermo-bonding member, and may be formed of a polymer sheet. The outer sheet 722 forms an outer surface of the pouch 120, serves as a protecting member, and may be formed of a polyethylene terephthalate (PET) sheet, a nylon sheet, or a PET-nylon composite sheet. The metal sheet 723 is provided between the inner and outer sheets 721 and 722 and provides mechanical strength for the pouch 120. The metal sheet 723 may be formed of an aluminum sheet.

For example, the first exterior member 201 is formed to have a concave structure for accommodating the electrode assembly 10, and the second exterior member 202 is flatly formed to cover the electrode assembly 10 accommodated in the first exterior member 201.

The sealing portions 31 and 32 are formed in a straight line to correspond to the first straight line electrode portion 101, and they form the terrace portion (T) that the lead tabs 16 and 17 are drawn out through. The sealing portions 31 and 32 are also formed in a straight line to correspond to the second straight line electrode portion 102 and are then folded to closely contact a lateral surface of the pouch 120. The sealing portions 31 and 32 are also formed in a curved line to correspond to the curved line electrode portion 103 and are then folded to closely contact a lateral curved surface of the pouch 120.

Because the first straight line portion 121 is shorter than the second straight line portion 122 and the first straight line electrode portion 101 of the electrode assembly 10 is shorter than the second straight line electrode portion 102 thereof, the space (S) accommodating the lead tabs 16 and 17 to be drawn out through the sealing portions 31 and 32 may be reduced or minimized.

For example, the terrace portion (T) formed in the first straight line portion 121 of the sealing portions 31 and 32 may be smaller than a terrace portion that could be formed in the second straight line portion 122 of the sealing portions 31 and 32. Because the lead tabs 16 and 17 are drawn out through the first straight line portion 121, the space (S) that is formed between the first straight line portion 121 of the sealing portions 31 and 32 and the first straight line electrode portion 101 of the electrode assembly 10 and that partially accommodates the lead tabs 16 and 17 is smaller than a space that would be formed between the second straight line portion 122 of the sealing portions 31 and 32 and the second straight line electrode portion 102 of the electrode assembly 10 if the lead tabs 16 and 17 were drawn out of the second straight line portion 122 of the sealing portions 31 and 32.

As areas of the coated regions 11a and 12a of the negative and positive electrodes 11 and 12 provided in the electrode assembly 10 increase, amounts of the active materials thereof increase, thereby increasing the capacity of the rechargeable battery 1.

Hereinafter, various other examples and embodiments of the invention will be described. For better understanding and convenience of description, description of the same or substantially similar configuration between the below-described examples and embodiments and the above-described examples and embodiments may be omitted while different configurations therebetween will be described.

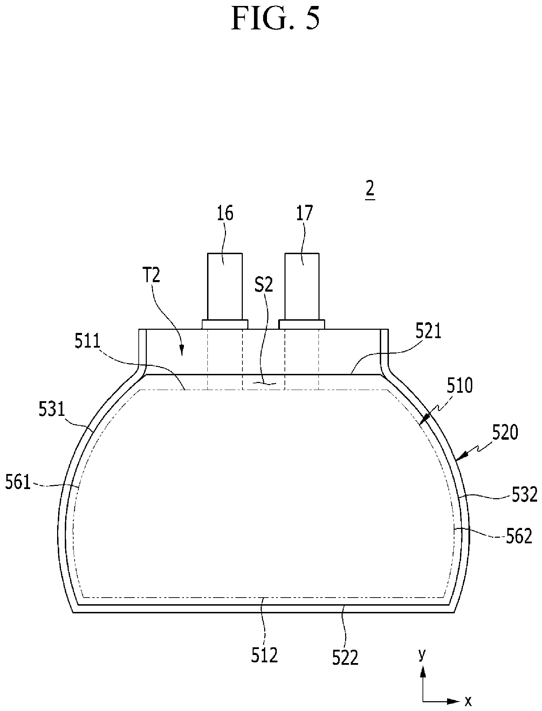

FIG. 5 illustrates a top plan view of a rechargeable battery according to an embodiment. Referring to FIG. 5, in a rechargeable battery 2 according to the embodiment, when viewed in plan view, a first straight line portion 521 and a second straight line portion 522 of a pouch 520 are disposed in parallel (e.g., are parallel to each other), and the pouch 520 includes a first curved line portion 531 and a second curved line portion 532 facing each other to connect (e.g., extending between) the first straight line portion 521 and the second straight line portion 522.

The rechargeable battery 2 according to the embodiment has an atypical structure of a partially-modified circular plate shape that includes a straight line portion. For example, the pouch 520 includes the first straight line portion 521 and the second straight line portion 522 formed by modifying two places (two areas) of a circular plate shape which includes the first curved line portion 531 and the second curved line portion 532.

According to such a shape (the partially-modified circular plate shape) of the pouch 520, the electrode assembly 510 includes a first straight line electrode portion 511, a second straight line electrode portion 512, a first curved line electrode portion 561, and a second curved line electrode portion 562.

The first curved line electrode portion 561 and the second curved line electrode portion 562 respectively connect (e.g., extend between) opposite ends of the first straight line electrode portion 511 and the second straight line electrode portion 512. An x-axis directional length of the first straight line electrode portion 511 is less than an x-axis directional length of the second straight line electrode portion 512.

In a state in which the electrode assembly 510 is accommodated in the pouch 520, the first straight line portion 521 and the second straight line portion 522 of the pouch 520 respectively correspond to the first straight line electrode portion 511 and the second straight line electrode portion 512 of the electrode assembly 510, and the first curved line portion 531 and the second curved line portion 532 respectively correspond to the first curved line electrode portion 561 and the second curved line electrode portion 562 of the electrode assembly 510.

The pouch 520 includes first and second exterior members and further includes sealing portions formed by thermo-bonding or heat-sealing the first and second exterior members to each other along an outer circumference or periphery of the electrode assembly 510 to accommodate the electrode assembly 510 therein.

The sealing portion of the pouch 520 forms a terrace portion (T2) in the first straight line portion 521, through which the lead tabs 16 and 17 are drawn out. In such a structure, a space (S2) is formed between the first straight line portion 521 of the pouch 520 and the first straight line electrode portion 511 of the electrode assembly 510 that partially accommodates inner sides or portions of the lead tabs 16 and 17 that are drawn out therebetween.

In this embodiment, because the first straight line portion 521 of the pouch 520 is shorter than the second straight line portion 522 thereof and the first straight line electrode portion 511 of the electrode assembly 510 is shorter than the second straight line electrode portion 512 thereof, the space (S2) accommodating the lead tabs 16 and 17 to be drawn out through the pouch 520 may be reduced or minimized.

For example, the terrace portion (T2) formed in the first straight line portion 521 of the pouch 520 is smaller than a terrace portion that could be formed in the second straight line portion 522 of the pouch 520. Because the lead tabs 16 and 17 are drawn out through the first straight line portion 521, the space (S2) that is formed between the first straight line portion 521 of the pouch 520 and the first straight line electrode portion 511 of the electrode assembly 510 and that partially accommodates the lead tabs 16 and 17 is smaller than a space that would be formed between the second straight line portion 522 of the pouch 520 and the second straight line electrode portion 512 of the electrode assembly 510 if the lead tabs 16 and 17 were drawn out through the second straight line portion 522.

As areas of the coated regions of the negative and positive electrodes provided in the electrode assembly 510 increase, amounts of the active materials thereof increase, thereby increasing the capacity of the rechargeable battery 2.

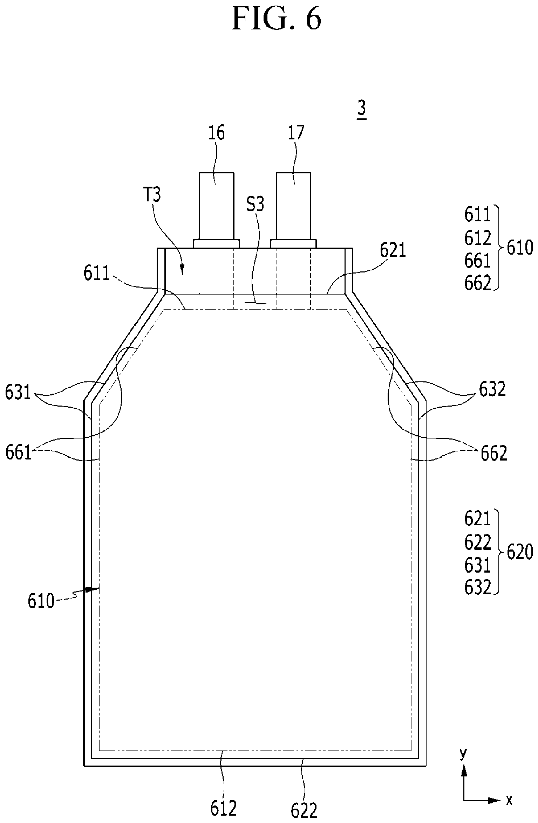

FIG. 6 illustrates a top plan view of a rechargeable battery according to a second example. Referring to FIG. 6, in a rechargeable battery 3 according to the second example, when viewed in plan view, a first straight line portion 621 and a second straight line portion 622 of a pouch 620 are disposed in parallel (e.g., are parallel to each other), and the pouch 620 includes a first bent portion 631 and a second bent portion 632 facing each other to connect (e.g., extending between) the first straight line portion 621 and the second straight line portion 622.

The rechargeable battery 3 according to the second example has an atypical structure of a partially-modified cuboid shape having straight line portions that are connected to form a bent structure or shape. For example, the pouch 620 includes the first bent portion 631 and the second bent portion 632 that are connected to (e.g., extend between) corners or ends of the straight line portions 621 and 622 at opposite ends thereof and are bent or curved at two places between the first straight line portion 621 and the second straight line portion 622.

According to such a shape of the pouch 620, the electrode assembly 610 includes a first straight line electrode portion 611, a second straight line electrode portion 612, a first bent electrode portion 661, and a second bent electrode portion 662.

The first bent electrode portion 661 and the second bent electrode portion 662 respectively connect (e.g., extend between) opposite ends of the first straight line electrode portion 611 and the second straight line electrode portion 612. Straight line portions of the first bent electrode portion 661 and the second bent electrode portion 662 are formed to be longer than an x-axis directional length of the first straight line electrode portion 611.

For example, the first and second bent electrode portions 661 and 662 are formed by connecting straight lines that are longer than the first straight line electrode portion 611. An x-axis directional length of the first straight line electrode portion 611 is less than an x-axis directional length of the second straight line electrode portion 612.

In a state in which the electrode assembly 610 is accommodated therein, the first straight line portion 621 and the second straight line portion 622 of the pouch 620 respectively correspond to the first straight line electrode portion 611 and the second straight line electrode portion 612 of the electrode assembly 610, and the first bent portion 631 and the second bent portion 632 respectively correspond to the first bent electrode portion 661 and the second bent electrode portion 662.

The pouch 620 includes first and second exterior members and further includes sealing portions formed by thermo-bonding or heat-sealing the first and second exterior members to each other along an outer circumference or periphery of the electrode assembly 610 to accommodate the electrode assembly 610.

The sealing portion of the pouch 620 forms a terrace portion (T3) in the first straight line portion 621 through which the lead tabs 16 and 17 are drawn out. In such a structure, a space (S3) is formed between the first straight line portion 621 of the pouch 620 and the first straight line electrode portion 611 of the electrode assembly 610 that partially accommodates inner sides or portions of the lead tabs 16 and 17 that are drawn out therebetween.

In this second example, because the first straight line portion 621 of the pouch 620 is shorter than the second straight line portion 622 thereof and the first straight line electrode portion 611 of the electrode assembly 610 is shorter than the second straight line electrode portion 612 thereof, the space (S3) accommodating the lead tabs 16 and 17 to be drawn out through the pouch 620 may be reduced or minimized.

For example, the terrace portion (T3) formed in the first straight line portion 621 of the pouch 620 is smaller than a terrace portion that could be formed in the second straight line portion 622 of the pouch 620. Because the lead tabs 16 and 17 are drawn out through the first straight line portion 621, the space (S3) that is formed between the first straight line portion 621 of the pouch 620 and the first straight line electrode portion 611 of the electrode assembly 610 and that partially accommodates the lead tabs 16 and 17 is smaller than a space that would be formed between the second straight line portion 622 of the pouch 620 and the second straight line electrode portion 612 of the electrode assembly 610 if the lead tabs 16 and 17 were drawn out through the second straight line portion 622 of the pouch 620.

As areas of the coated regions of the negative and positive electrodes provided in the electrode assembly 610 increase, amounts of the active materials thereof increase, thereby increasing the capacity of the rechargeable battery 3.

While the invention has been described in connection with what are presently considered to be a practical embodiment thereof, it is to be understood that the present invention is not limited to the disclosed embodiment but is intended to cover various modifications and equivalent arrangements included within the scope of the appended claims.

## Claims

1. A rechargeable battery (2) comprising:
an electrode assembly (510) configured to charge and discharge a current;
a pouch (520) accommodating the electrode assembly, the pouch comprising, when viewed in plan view, a first straight line portion (521) and a second straight line portion (522) that is longer than the first straight line portion, wherein the pouch comprises a first exterior member (201) and a second exterior member (202) that face each other and accommodate the electrode assembly (510), wherein, when viewed in plan view, the first straight line portion (521) and the second straight line portion (522) of the pouch (520) are parallel, and wherein the first straight line portion (521) and the second straight line portion (522) of the pouch are respectively connected to a first curved line portion (531) and a second curved line portion (532) that face each other and extend between the first straight line portion (521) and the second straight line portion (522)
wherein the electrode assembly (510) comprises:
a first straight line electrode portion (511) and a second straight line electrode portion (512) that respectively correspond to the first straight line portion (521) and the second straight line portion (522); and
a first curved line electrode portion (561) and a second curved line electrode portion (562) that respectively correspond to the first curved line portion (531) and the second curved line portion (532) and extend between the first straight line electrode portion (511) and the second straight line electrode portion (512);
a sealing portion (31, 32) of the first exterior member (201) and the second exterior member (202), the sealing portion (31, 32) having a sealing width and extending along an outer periphery of the electrode assembly (510), wherein the sealing portion (31, 32) comprises a straight line sealing portion, a first curved line sealing portion and a second curved line sealing portion that are formed to respectively correspond to the second straight line electrode portion (512), the first curved line electrode portion (561) and the second curved line electrode portion (562); and
a lead tab (16, 17) electrically connected to the electrode assembly (510) and drawn out through the first straight line portion (521) of the pouch (520), wherein the sealing portion (31, 32) forms a terrace portion in the first straight line portion (521) through which the lead tab (16, 17) is drawn out and is folded to closely contact a lateral surface of the pouch (520) in the second straight line portion (522), the first curved line portion (531) and the second curved line portion (532).

2. A rechargeable battery (2) according to claim 1, wherein the lead tab (16, 17) is connected to the electrode assembly (510) at the first straight line electrode portion (511).

3. A rechargeable battery (2) according to claim 2, wherein the first straight line portion (521) of the pouch (520) and the first straight line electrode portion (511) of the electrode assembly (510) have a space therebetween which partially accommodates the lead tab (16, 17).

## Patentansprüche

1. Wiederaufladbare Batterie (2), umfassend:
eine Elektrodenanordnung (510), die dazu ausgestaltet ist, einen Strom aufzuladen und zu entladen;
eine Tasche (520), welche die Elektrodenanordnung aufnimmt, wobei die Tasche, wenn sie aus der Draufsicht betrachtet wird, einen ersten geradlinigen Abschnitt (521) und einen zweiten geradlinigen Abschnitt (522), der länger ist als der erste geradlinige Abschnitt, umfasst, wobei die Tasche ein erstes äußeres Teil (201) und ein zweites äußeres Teil (202), die einander zugewandt sind und die Elektrodenanordnung (510) aufnehmen, umfasst, wobei, wenn sie aus der Draufsicht betrachtet werden, der erste geradlinige Abschnitt (521) und der zweite geradlinige Abschnitt (522) der Tasche (520) parallel sind, und wobei der erste geradlinige Abschnitt (521) und der zweite geradlinige Abschnitt (522) der Tasche jeweils mit einem ersten krummlinigen Abschnitt (531) und einem zweiten krummlinigen Abschnitt (532), die einander zugewandt sind und sich zwischen dem ersten geradlinigen Abschnitt (521) und dem zweiten geradlinigen Abschnitt (522) erstrecken. verbunden sind,
wobei die zweite Elektrodenanordnung (510) Folgendes umfasst:
einen ersten geradlinigen Elektrodenabschnitt (511) und einen zweiten geradlinigen Elektrodenabschnitt (512), die jeweils dem ersten geradlinigen Abschnitt (521) und dem zweiten geradlinigen Abschnitt (522) entsprechen; und
einen ersten krummlinigen Elektrodenabschnitt (561) und einen zweiten krummlinigen Elektrodenabschnitt (562), die jeweils dem ersten krummlinigen Abschnitt (531) und dem zweiten krummlinigen Abschnitt (532) entsprechen und sich zwischen dem ersten geradlinigen Elektrodenabschnitt (511) und dem zweiten geradlinigen Elektrodenabschnitt (512) erstreckt;
einen Dichtungsabschnitt (31, 32) des ersten äußeren Teils (201) und des zweiten äußeren Teils (202), wobei der Dichtungsabschnitt (31, 32) eine Dichtungsbreite aufweist und sich entlang eines äußeren Umfangs der Elektrodenanordnung (510) erstreckt, wobei der Dichtungsabschnitt (31, 32) einen geradlinigen Dichtungsabschnitt, einen ersten krummlinigen Dichtungsabschnitt und einen zweiten krummlinigen Dichtungsabschnitt umfasst, die dazu ausgebildet sind, jeweils dem zweiten geradlinigen Elektrodenabschnitt (512), dem ersten krummlinigen Elektrodenabschnitt (561) und dem zweiten krummlinigen Elektrodenabschnitt (562) zu entsprechen; und
eine Anschlussleiste (16, 17), die elektrisch mit der Elektrodenanordnung (510) verbunden ist und durch den ersten geradlinigen Abschnitt (521) der Tasche (520) abgeführt wird, wobei der Dichtungsabschnitt (31, 32) in dem ersten geradlinigen Abschnitt (521) einen Terrassenabschnitt ausbildet, durch den die Anschlussleiste (16, 17) abgezogen und so geknickt wird, dass er eine Seitenfläche der Tasche (520) eng kontaktiert in dem zweiten geradlinigen Abschnitt (522), dem ersten krummlinigen Abschnitt (531) und dem zweiten krummlinigen Abschnitt (532).

2. Wiederaufladbare Batterie (2) nach Anspruch 1,
wobei die Anschlussleiste (16, 17) an dem ersten geradlinigen Elektrodenabschnitt (511) mit der Elektrodenanordnung (510) verbunden ist.

3. Wiederaufladbare Batterie (2) nach Anspruch 2, wobei der erste geradlinige Abschnitt (521) der Tasche (520) und der erste geradlinige Elektrodenabschnitt (511) der Elektrodenanordnung (510) einen dazwischenliegenden Raum aufweisen, der die Anschlussleiste (16, 17) teilweise aufnimmt.

## Revendications

1. Batterie rechargeable (2) comprenant :
un ensemble d'électrodes (510) configuré pour charger et décharger un courant ;
un étui (520) logeant l'ensemble d'électrodes, l'étui comprenant, lorsqu'il est vu en vue plane, une première partie droite (521) et une deuxième partie droite (522) qui est plus longue que la première partie droite, où l'étui comprend un premier organe extérieur (201) et un deuxième organe extérieur (202) qui se font mutuellement face et logent l'ensemble d'électrodes (510), où, lorsqu'elles sont vues en vue plane, la première partie droite (521) et la deuxième partie droite (522) de l'étui (520) sont parallèles, et où la première partie droite (521) et la deuxième partie droite (522) de l'étui sont respectivement reliées à une première partie incurvée (531) et une deuxième partie incurvée (532) qui se font mutuellement face et s'étendent entre la première partie droite (521) et la deuxième partie droite (522),
dans laquelle l'ensemble d'électrodes (510) comprend :
une première partie d'électrodes droite (511) et une deuxième partie d'électrodes droite (512) qui correspondent respectivement à la première partie droite (521) et à la deuxième partie droite (522) ; et
une première partie d'électrodes incurvée (561) et une deuxième partie d'électrodes incurvée (562) qui correspondent respectivement à la première partie incurvée (531) et à la deuxième partie incurvée (532) et s'étendent entre la première partie d'électrodes droite (511) et la deuxième partie d'électrodes droite (512) ;
une partie d'étanchéité (31, 32) du premier organe extérieur (201) et du deuxième organe extérieur (202), la partie d'étanchéité (31, 32) ayant une largeur d'étanchéité et s'étendant le long d'une périphérie extérieure de l'ensemble d'électrodes (510), où la partie d'étanchéité (31, 32) comprend une partie d'étanchéité droite, une première partie d'étanchéité incurvée et une deuxième partie d'étanchéité incurvée qui sont formées de manière à correspondre respectivement à la deuxième partie d'électrodes droite (512), à la première partie d'électrodes incurvée (561) et à la deuxième partie d'électrodes incurvée (562) ; et
une languette conductrice (16, 17) connectée électriquement à l'ensemble d'électrodes (510) et sortant à travers la première partie droite (521) de l'étui (520), où la partie d'étanchéité (31, 32) forme une partie de terrasse dans la première partie droite (521) à travers laquelle la languette conductrice (16, 17) est sortie et est pliée pour être en contact étroit avec une surface latérale de l'étui (520) dans la deuxième partie droite (522), la première partie incurvée (531) et la deuxième partie incurvée (532).

2. Batterie rechargeable (2) selon la revendication 1, dans laquelle la languette conductrice (16, 17) est connectée à l'ensemble d'électrodes (510) au niveau de la première partie d'électrodes droite (511).

3. Batterie rechargeable (2) selon la revendication 2, dans laquelle la première partie droite (521) de l'étui (520) et la première partie d'électrodes droite (511) de l'ensemble d'électrodes (510) ont un espace entre elles qui loge partiellement la languette conductrice (16, 17).
